# EUROPEAN PATENT SPECIFICATION

(11) **EP 2 467 244 B1**
(45) Date of publication and mention of the grant of the patent: **11.11.2015**
(21) Application number: 10751707.0
(22) Date of filing: 20.08.2010
(51) Int. Cl.: B29C 45/16, B29C 49/00, B65D 85/84, B65D 81/26

(54) **METHOD OF FORMING A BLOWABLE PARISON, AND CONTAINER COMPRISING SUCH PARISON**
VERFAHREN ZUR HERSTELLUNG EINES BLASBAREN VORFORMLINGS, UND BEHÄLTER UMFASSEND EINEN SOLCHEN VORFORMLING
PROCÉDÉ DE FORMATION D'UNE PARAISON GONFLABLE, ET CONTENEUR COMPRENANT UNE TELLE PARAISON

(30) Priority: 22.08.2009 GB 0914702
(43) Date of publication of application: 27.06.2012
(73) Proprietor: Reckitt Benckiser N.V., 2132 WT Hoofddorp (NL)
(72) Inventor: DI BONO, Giuseppe, I-30034 Mira (IT); PRETTO, Nicola, I-30034 Mira (IT)
(74) Representative: Bowers, Craig Malcolm
(86) International application number: PCT/GB2010/051386
(87) International publication number: WO 2011/023987

(56) References cited:
- GB-A- 2 375 515
- JP-A- 62 051 423
- US-A1- 2005 170 113

## Description

This invention relates to the injection moulding of blowable plastics parisons.

Blow moulding of bottles from blowable parisons is well known. In the bottle forming process a pre-formed parison is formed by injecting a flowable plastics material into a mould. This parison is treated in a second stage by blowing the parison in a second mould (usually under heat application) to produce a finished container / bottle.

US2005/170113 discloses a method of parison formation wherein two different materials are injected into the parison mould.

The process is flexible, quick and relatively inexpensive and is used in mass-production facilities for the production of bottles and containers for household articles. The articles can even be recycled after use in straightforward processes.

One issue for containers produced in this way is the incorporation therein of materials which generate pressure in storage. Of course in some cases, such as the containerisation of soft drinks, the build-up / maintenance of pressure is a desired feature and the container is designed to accommodate such pressure. In other cases where containers are intended to store non-edible compositions / toxic compositions the build-up of pressure is extremely undesirable as on opening of the container / removal of the container contents adverse pressure in the container can cause erratic / unpredictable content discharge. Such discharge can be harmful to a user.

Additionally some compositions cause excessive pressure build-up in a container which, if left unaddressed would cause rupture of the container and thus spillage.

GB2375515 discloses an injection moulded container with a pressure relief means.

Usually a pressure relief mechanism is incorporated into containers which are intended to accommodate a material which gives rise to gas evolution / pressure build up. Often the relief mechanism comprises a valve which is incorporated into the container.

Such a valve may be incorporated either in the container's lid or directly onto the container's cap. In each case, a significant drawback exists in the need for an extra manufacturing operation, including extra material, extra processing time and extra packaging equipment (and/or an additional supplier / manufacturer for producing the venting lids / applying the inserts).

It is an object of the present invention to obviate / mitigate the disadvantages of the prior art shown above.

According to a first aspect of the invention there is provided method of forming an essentially tubular blowable plastics parison comprising injection moulding an essentially tubular parison around a mould surface, using means for injecting flowable plastics material to said injection mould at an injection station to form a parison around said mould surface, wherein said means comprises a plurality of individual injectors, with at least a secondary injector being capable of injecting a different composition from the remaining primary injectors, wherein the secondary material is capable of forming a porous portion of material.

The method of the invention has been found to be surprisingly advantageous is that the production of blowable parison is facilitated wherein the parison comprises a portion comprising porous material. Thus the parison can be formed into a container which can be used to accommodate a material that generates pressure in storage, wherein the pressure can be released without causing rupture of the container / erratic container content discharge. Additionally no secondary pressure release mechanism is required. Moreover there is no need for any additional manufacture steps for the incorporation of such secondary pressure release mechanism.

Suitable examples of secondary materials include polyethylene, polypropylene or polyethylene terephthalate resins blended with open porosity generators.

Generally the open porosity generators comprise gases, low boiling temperature liquids or degradable substances that degrade (e.g. under the application of heat) to yield gaseous by-products (such as hydrogen, oxygen, nitrogen, carbon dioxide, carbon monoxide and / or water vapour. Suitable examples of open porosity generators include acetone, sodium bicarbonate, azodicarbonamide, p-toluene sulfonyl semicarbazide, and p,p-oxybis benzene sulfonyl hydrazide.

Preferably the primary material is a capable of forming a non-porous skin of material. Suitable examples of primary materials include plastics material such as polyethylene, polypropylene or polyethylene terephthalate.

After injection the parison may require / be subjected to further processing steps. A preferred example of such a step is a curing step. In such a step no additional treatment may be applied to the parison but the parison may be allowed to "rest" for a period of time (possibly under altered temperature / altered humidity) so that all of its components are allowed to fully stabilise and / or to allow the porosity generation step to come to completion.

Preferably the parison of the first aspect of the invention is further processed into a container for accommodating an amount of material, preferably a liquid material but optionally a solid material / admixture of liquid and solid material, e.g. such as paste.

Thus according to a second aspect of the invention there is provided a container comprising a parison, formed by the method according to the invention, wherein the container is formed by the application of internal pressure and / or heat to the parison in a mould, characterised in that said parison is formed from a primary and a secondary flowable plastics material, wherein the secondary material is capable of forming a porous portion of material.

Generally the container is formed such that it has a closure, e.g. a screw-top lid which co-operates with an engaging screw-thread and other optional features such as a handle.

Preferably the container is for a liquid containing a material that evolves a gas.

Suitable examples of gas evolving material comprise bleaches, e.g. per-salts (such as percarbonate, perborate, a peracid and / or a salt thereof), hydrogen peroxide, chlorine based compound.

Preferably the bleach forms a part of a detergent formulation. The detergent formulation is preferably in the form of a liquid. The detergent formulation may comprise one or more other components that are typically found in a detergent formulation such as a surfactant (nonionic, cationic, anionic), enzyme, pH modifying agent, dye, perfume, builder, dye transfer inhibition agent, thickener, stabiliser, soil suspending agent.

The container may comprise multiple compartments (either formed from a single parison or from multiple joined parisons). Preferably 2, 3, 4 or more compartments may be present. The compartments may be arranged in a side by side format. Each compartment may have its own release opening or there may be a common opening for some or all of the compartments. The compartments may be used to house different formulations. The different formulations may be antagonistic toward one another, e.g. a bleach based formulation and an enzyme based formulation. At least one (or all) the different formulations may release a gas in storage.

## Claims

1. A method of forming an essentially tubular blowable plastics parison comprising injection moulding an essentially tubular parison around a mould surface, using means for injecting flowable plastics material to said injection mould at an injection station to form a parison around said mould surface, wherein said means comprises a plurality of individual injectors, with at least a secondary injector being capable of injecting a different composition from the remaining primary injectors, wherein the secondary material is capable of forming a porous portion of material.

2. A method according to claim 1, wherein the secondary material is a plastics material such as polyethylene, polypropylene or polyethylene terephthalate .

3. A method according to claim 1 or 2 wherein the secondary material includes an open porosity generator.

4. A method according to claim 3, wherein the open porosity generator comprises a gas, a low boiling temperature liquid or a degradable substance such as acetone, sodium bicarbonate, azodicarbonamide, p-toluene sulfonyl semicarbazide, and p,p-oxybis benzene sulfonyl hydrazide.

5. A method according to any one of claims 1 to 4, wherein the primary material is capable of forming a non-porous skin of material.

6. A method according to claim 5, wherein the primary material is a plastics material such as polyethylene, polypropylene or polyethylene terephthalate.

7. A container comprising a parison, formed by a method according to any one of the preceding claims, wherein the container is formed by the application of internal pressure and / or heat to the parison in a mould, **characterised in that** said parison is formed from a primary and a secondary flowable plastics material, wherein the secondary material is capable of forming a porous portion of material.

## Patentansprüche

1. Verfahren zum Bilden eines im Wesentlichen rohrförmigen blasbaren Kunststoffvorformlings, umfassend Spritzgießen eines im Wesentlichen rohrförmigen Vorformlings um eine Formoberfläche herum unter Verwendung von Mitteln zum Injizieren von fließfähigem Kunststoffmaterial in die Spritzgussform an einer Spritzstation, um einen Vorformling um die Formoberfläche herum zu bilden, wobei das Mittel eine Vielzahl individueller Injektoren umfasst, wobei mindestens ein Sekundärinjektor in der Lage ist, eine andere Zusammensetzung als die restlichen Primärinjektoren zu injizieren, wobei das Sekundärmaterial in der Lage ist, einen Abschnitt aus porösem Material zu bilden.

2. Verfahren nach Anspruch 1, wobei das Sekundärmaterial ein Kunststoffmaterial wie Polyethylen, Polypropylen oder Polyethylenterephthalat ist.

3. Verfahren nach Anspruch 1 oder 2, wobei das Sekundärmaterial einen Offenporigkeitserzeuger einschließt.

4. Verfahren nach Anspruch 3, wobei der Offenporigkeitserzeuger ein Gas, eine bei niedriger Temperatur siedende Flüssigkeit oder eine abbaubare Substanz umfasst, wie Aceton, Natriumbicarbonat, Azodicarbonamid, p-Toluolsulfonylsemicarbazid und p,p-Oxybisbenzolsulfonylhydrazid.

5. Verfahren nach einem der Ansprüche 1 bis 4, wobei das Primärmaterial in der Lage ist, eine Haut aus nichtporösem Material zu bilden.

6. Verfahren nach Anspruch 5, wobei das Primärmaterial ein Kunststoffmaterial wie Polyethylen, Polypropylen oder Polyethylenterephthalat ist.

7. Behälter, umfassend einen Vorformling, der gemäß einem Verfahren nach einem der vorhergehenden Ansprüche gebildet worden ist, wobei der Behälter durch Anwendung von innerem Druck und/oder Wärme auf den Vorformling in einer Form gebildet wird, **dadurch gekennzeichnet, dass** der Vorformling aus einem primären und einem sekundären fließfähigen Kunststoffmaterial gebildet ist, wobei das Sekundärmaterial in der Lage ist, einen Abschnitt aus porösem Material zu bilden.

## Revendications

1. Procédé de formation d'une paraison en plastique gonflable essentiellement tubulaire comprenant le moulage par injection d'une paraison essentiellement tubulaire autour d'une surface de moule, en utilisant un moyen pour injecter une matière plastique fluide dans ledit moule d'injection à un poste d'injection pour former une paraison autour de ladite surface de moule, ledit moyen comprenant une pluralité d'injecteurs individuels, avec au moins un injecteur secondaire capable d'injecter une composition différente des injecteurs primaires restants, la matière secondaire étant susceptible de former une portion de matière poreuse.

2. Procédé selon la revendication 1, dans lequel la matière secondaire est une matière plastique telle que le polyéthylène, le polypropylène ou le téréphtalate de polyéthylène.

3. Procédé selon la revendication 1 ou 2 dans lequel la matière secondaire comporte un générateur de porosité ouverte.

4. Procédé selon la revendication 3, dans lequel le générateur de porosité ouverte comprend un gaz, un liquide à basse température d'ébullition ou une substance dégradable telle que l'acétone, le bicarbonate de sodium, l'azodicarbonamide, le semicarbazide de p-toluènesulfonyle, et l'hydrazide de p,p-oxybisbenzènesulfonyle.

5. Procédé selon l'une quelconque des revendications 1 à 4, dans lequel la matière primaire est susceptible de former une peau de matière non poreuse.

6. Procédé selon la revendication 5, dans lequel la matière primaire est une matière plastique telle que le polyéthylène, le polypropylène ou le téréphtalate de polyéthylène.

7. Récipient comprenant une paraison, formée par un procédé selon l'une quelconque des revendications précédentes, le récipient étant formé par l'application d'une pression interne et/ou de chaleur à la paraison dans un moule, **caractérisé en ce que** ladite paraison est formée à partir d'une matière plastique fluide primaire et secondaire, la matière secondaire étant susceptible de former une portion de matière poreuse.
